(19) **Europäisches Patentamt / European Patent Office / Office européen des brevets**

(11) **EP 2 201 248 B1**

(12) # EUROPEAN PATENT SPECIFICATION

(45) Date of publication and mention
of the grant of the patent:
**19.06.2013 Bulletin 2013/25**

(21) Application number: **08841692.0**

(22) Date of filing: **10.10.2008**

(51) Int Cl.:
*F04B 39/00* (2006.01)      *F04B 39/12* (2006.01)
*F04B 39/14* (2006.01)      *F04B 35/04* (2006.01)

(86) International application number:
**PCT/KR2008/005995**

(87) International publication number:
**WO 2009/054635 (30.04.2009 Gazette 2009/18)**

(54) **LINEAR COMPRESSOR**

LINEARER VERDICHTER

COMPRESSEUR LINÉAIRE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **24.10.2007 KR 20070107383**

(43) Date of publication of application:
**30.06.2010 Bulletin 2010/26**

(73) Proprietor: **LG Electronics, Inc.**
**Seoul 150-010 (KR)**

(72) Inventors:
 • **KIM, Jung-Hae**
 **Incheon 405-233 (KR)**
 • **YANG, Yoon-Seok**
 **Incheon 405-230 (KR)**
 • **PARK, Jaesang**
 **Changwon-si**
 **Gyeongsangnam-do 641-100 (KR)**
 • **HONG, Seong-Joon**
 **Sungnam-si**
 **Bundang-gu**
 **Gyeonggi-do 463-050 (KR)**
 • **KIM, Dong-Han**
 **Seoul 143-130 (KR)**
 • **HYEON, Seong-Yeol**
 **Gimhae-si**
 **Gyeongsangnam-do 621-723 (KR)**

(74) Representative: **Cabinet Plasseraud**
**52, rue de la Victoire**
**75440 Paris Cedex 09 (FR)**

(56) References cited:
EP-A1- 0 521 526      EP-A1- 0 745 773
EP-A1- 1 686 264      WO-A1-02/084121
WO-A1-02/095232      WO-A2-2004/081379
US-A- 3 887 304      US-A1- 2005 142 007

EP 2 201 248 B1

## Description

### Technical Field

The present invention relates to a linear compressor, and more particularly, to a linear compressor which can improve productivity by fixedly welding a motor cover to a rear cover.

### Background Art

Generally, in a reciprocating compressor, a compression space to/from which an operation gas is sucked and discharged is defined between a piston and cylinder, so that the piston is linearly reciprocated inside the cylinder to compress refrigerant.

Since the reciprocating compressor includes a component for converting a rotation force of a driving motor into a linear reciprocation force of the piston, such as a crank shaft, a large mechanical loss occurs due to the motion conversion. Recently, a linear compressor has been actively developed to solve the foregoing problem.

In the linear compressor, particularly, a piston is connected directly to a linearly-reciprocated linear motor to prevent the mechanical loss by the motion conversion, improve the compression efficiency and simplify the configuration. Power inputted to the linear motor can be regulated to control the operation thereof. Accordingly, since the linear compressor can reduce noise more than the other compressors, it has been mostly applied to electric home appliances used indoors, such as a refrigerator.

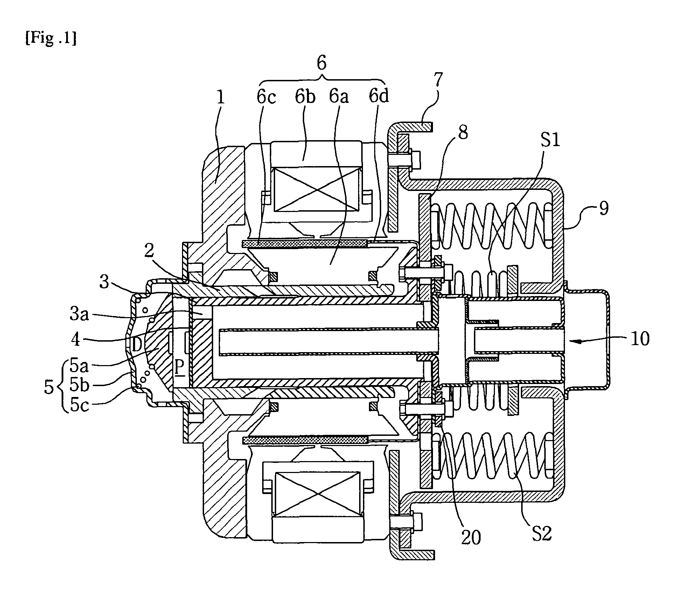

FIG. 1 is a view illustrating an example of a conventional linear compressor.

In the conventional linear compressor, a structure composed of a frame 1, a cylinder 2, a piston 3, a suction valve 4, a discharge valve assembly 5, a linear motor 6, a motor cover 7, a supporter 8, a rear cover 9, main springs S1 and S2 and a muffler assembly 10 is installed to be elastically supported inside a shell (not shown).

The cylinder 2 is fixedly fitted into the frame 1, the discharge valve assembly 5 composed of a discharge valve 5a, a discharge cap 5b and a discharge valve spring 5c is installed to block one end of the cylinder 2, the piston 3 is inserted into the cylinder 2, and the thin suction valve 4 is installed to open and close an outlet 3a of the piston 2.

In the linear motor 6, a permanent magnet 6c is installed to be linearly reciprocated, maintaining an air-gap between an inner stator 6a and an outer stator 6b. The permanent magnet 6c is connected to the piston 3 by a connection member 6d, and linearly reciprocated due to a mutual electromagnetic force between the inner stator 6a, the outer stator 6b and the permanent magnet 6c to thereby operate the piston 3.

The motor cover 7 supports the outer stator 6b in an axis direction to fix the outer stator 6b, and is bolt-fixed to the frame 1. The rear cover 9 is coupled to the motor cover 7. The supporter 8 connected to the other end of the piston 3 is installed between the motor cover 7 and the rear cover 9 to be elastically supported by the main springs S1 and S2 in an axis direction. The muffler assembly 10 for sucking refrigerant is fastened together with the supporter 8.

Here, the main springs S 1 and S2 include four front springs S 1 and four rear springs S2 in up-down and left-right positions symmetric around the supporter 8. When the linear motor 6 is operated, the front springs S1 and the rear springs S2 are driven in the opposite directions to buff the piston 3 and the supporter 8. Besides, refrigerant in a compression space P serves as a kind of gas spring to buff the piston 3 and the supporter 8.

Therefore, when the linear motor 6 is operated, the piston 3 and the muffler assembly 10 connected thereto are linearly reciprocated. Since a pressure inside the compression space P is varied, the operations of the suction valve 4 and the discharge valve assembly 5 are automatically controlled. During the operation, refrigerant flows through a suction tube on the shell side, an opening portion of the rear cover 9, the muffler assembly 10 and an inlet 3a of the piston 3, is sucked into and compressed in the compression space P, and is externally discharged through the discharge cap 5b, a loop pipe and a discharge tube on the shell side.

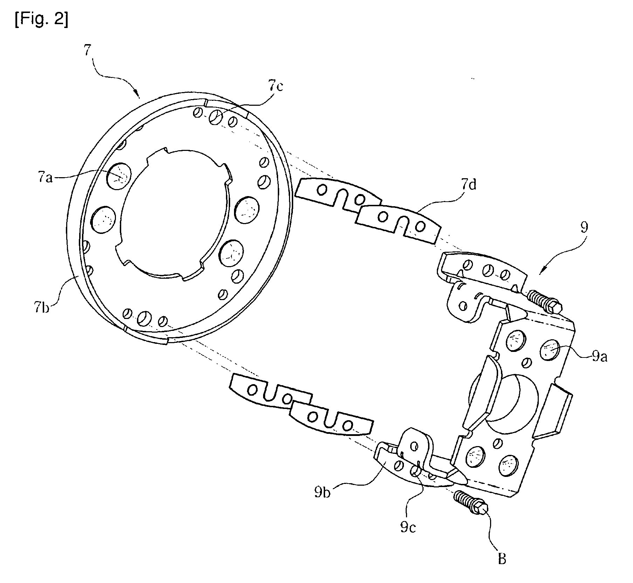

FIG. 2 is a view illustrating an example of an installation structure of the motor cover and the rear cover of the conventional linear compressor. The conventional motor cover 7 is formed in the shape of a disk with a central opening portion so that the piston 3 (refer to FIG. 1) can pass through the opening portion. A pair of spring supporting portions 7 protruding to support the front main springs S1 (refer to FIG. 1) with the supporter 8 (refer to FIG. 1) are provided at both sides of the opening portion, respectively. A protruding end 8 protruding in an axis direction opposite to the compression space P (refer to FIG. 1) is provided at a rim portion of the motor cover 7. A plurality of bolt holes 9 are formed in portions coupled to the rear cover 9 inside the protruding end 8.

The conventional rear cover 9 is formed in the shape of a plate with a central opening portion so that a part of the muffler assembly 10 (refer to FIG. 1) can be mounted on the opening portion. A pair of spring supporting portions 9a protruding to support the rear main spring S2 (refer to FIG. 1) are provided at both sides of the opening portion, respectively. A pair of supporting ends 9b bent toward the compression space P (refer to FIG. 1) and then outwardly bent to be brought into contact with the motor cover 7 are provided at both ends of the rear cover 9. A plurality of bolt holes 9c are formed in portions of the supporting ends 9b coupled to the motor cover 7.

When the motor cover 7 and the supporting ends 9b of the rear cover 9 are brought into contact, bolts B are fastened to the bolt holes 9 of the motor cover 7 and the bolt 9c of the rear cover 9. Here, a plurality of spacers 7d can be installed in the contact portions of the motor cover 7 and the supporting ends 9b of the rear cover 9 to maintain a predetermined interval in an axis direction. A dimension design value is different in each product model, and a dimension tolerance is generated during an assembly process. In this circumstance, so as to compensate for a dimension variation value, the spacers 7d are used to regulate a distance from the motor cover 7 to the rear cover 9.

However, in the conventional reciprocating compressor, in order to adjust an initial design value, an assembly tolerance and a measurement tolerance, the spacers are inserted between the motor cover and the rear cover of fixed standard, and the motor cover, the spacers and the rear cover are bolt-assembled at a time. As a result, the assembly time increases and the production cost rises because of the spacers. Examples of the related art can be found in EP 0 745 773 A1, having the technical features as defined in the preamble of claim 1, WO 02/095232 A1 and WO 2004/081379 A2.

Disclosure of Invention

Technical Problem

The present invention has been made to solve the above-described shortcomings occurring in the prior art, and an object of the present invention is to provide a linear compressor which can omit spacers by connecting a motor cover directly to a rear cover.

Another object of the present invention is to provide a linear compressor which can save materials by connecting an unnecessary part of a motor cover to a rear cover. Technical Solution

According to the present invention for achieving the aforementioned objects, there is provided a linear compressor, including: a cylinder having a compression space of refrigerant therein; a piston linearly reciprocated inside the cylinder to compress the refrigerant; a supporter connected to the back of the piston; a plurality of front and rear main springs for elastically supporting the supporter; a motor cover installed at the front of the supporter with a predetermined interval in an axis direction to support the front main springs, a pair of supporting ends being formed by partially cutting an inner portion of the motor cover and bent backward; and a rear cover installed at the back of the supporter with a predetermined interval in an axis direction to support the rear main springs, and fixedly welded to the supporting ends of the motor cover.

In addition, the supporting ends of the motor cover and the rear cover are surface-welded to each other.

Moreover, the rear cover includes a pair of welding portions formed by partially bending both ends thereof, and the welding portions of the rear cover are welded in contact with opposite surfaces of the supporting ends of the motor cover, respectively.

Further, an initial position of the piston is set up according to axis direction welding positions of the supporting ends of the motor cover and the rear cover.

**Advantageous Effects**

As discussed earlier, in the linear compressor according to the present invention, the motor cover and the rear cover are welded directly to each other. During the welding process, the welding positions of the motor cover and the rear cover are adjusted in an axis direction, thereby dealing with various dispersions and lowering a defect rate. In addition, components required for the bolt assembly, such as spacers, bolts, etc., can be omitted to reduce the assembly process time and cut down the production cost.

Moreover, in the linear compressor according to the present invention, the unnecessary parts of the motor cover are bent toward the rear cover in an axis direction to form the supporting ends of the motor cover, and the supporting ends of the motor cover are welded directly to the rear cover, thereby considerably cutting down the material cost.

**Brief Description of the Drawings**

FIG. 1 is a view illustrating an example of a conventional linear compressor.

FIG. 2 is a view illustrating an example of an installation structure of the motor cover and the rear cover of the conventional linear compressor.

FIG. 3 is a view illustrating a linear compressor according to an embodiment of the present invention.

FIG. 4 is a view illustrating an example of a motor cover applied to FIG. 3.

FIG. 5 is a view illustrating an example of a supporter applied to FIG. 3.

FIG. 6 is a view illustrating an example of an installation structure of the motor cover and the rear cover of the linear compressor according to the present invention.

FIGS. 7 to 9 are views illustrating an example of an installation process of the motor cover and the rear cover of the linear compressor according to the present invention.

## Mode for the Invention

Hereinafter, preferred embodiments of the present invention will be described in detail with reference to the accompanying drawings.

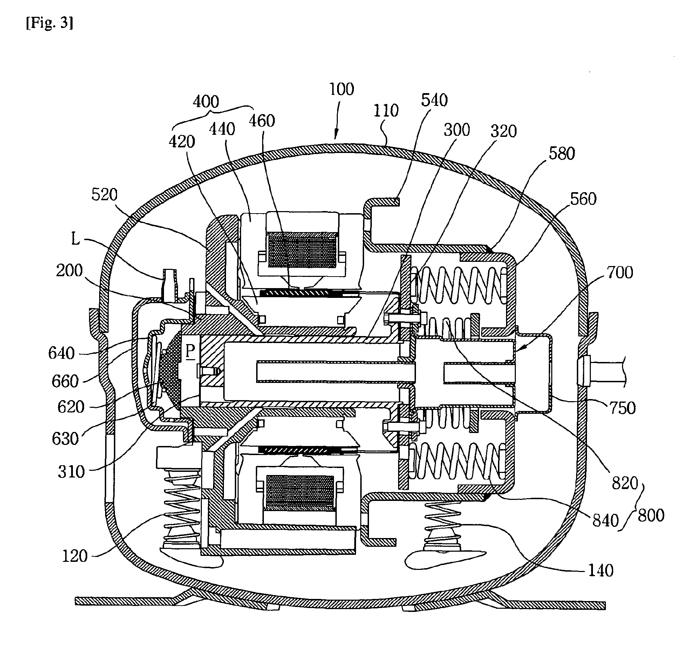

FIG. 3 is a view illustrating a linear compressor according to an embodiment of the present invention. The linear compressor 100 according to the present invention includes a cylinder 200, a piston 300, and a linear motor 400 composed of an inner stator 420, an outer stator 440 and a permanent magnet 460 inside a shell 110 which is a hermetic container. When the permanent magnet 460 is linearly reciprocated between the inner stator 420 and the outer stator 440 due to a mutual electromagnetic force, the piston 300 connected to the permanent magnet 460 is linearly reciprocated together with the permanent magnet 460.

The inner stator 420 is fixed to an outer circumference of the cylinder 200, and the outer stator 440 is fixed by a frame 520 and a motor cover 540 in an axis direction. The frame 520 and the motor cover 540 are fastened to each other by means of a fastening member such as a bolt, so that the outer stator 440 is fixed between the frame 520 and the motor cover 540. The frame 520 can be integrally formed with the cylinder 200, or individually formed from the cylinder 200 and coupled to the cylinder 200. In the embodiment of FIG. 3, the frame 520 and the cylinder 200 are integrally formed.

A supporter 320 is connected to the back of the piston 300. Both ends of two front main springs 820 are supported by the supporter 320 and the motor cover 540. In addition, both ends of a single rear main spring 840 are supported by the supporter 320 and a rear cover 560. The rear cover 560 is coupled to the back of the motor cover 540. Here, a spring guider is provided at the supporter 320 to prevent abrasion of the supporter 320 and enhance the supporting strength of the rear main spring 840. The spring guider not only supports the rear main spring 840 but also guides the piston 300 and the rear main spring 840 to have the same center. Moreover, a suction muffler 700 is provided at the back of the piston 300. Refrigerant is introduced into the piston 300 through the suction muffler 700, thereby considerably suppressing refrigerant suction noise. At this time, the suction muffler 700 is positioned inside the rear main spring 840.

The piston 300 is hollowed so that the refrigerant introduced through the suction muffler 700 can be sucked into and compressed in a compression space P defined between the cylinder 200 and the piston 300. A valve 310 is installed at a front end of the piston 300. The valve 310 opens the front end of the piston 300 so as to allow the refrigerant to flow from the piston 300 to the compression space P, and blocks the front end of the piston 300 so as to prevent the refrigerant from returning from the compression space P to the piston 300.

When the refrigerant is compressed over a predetermined pressure in the compression space P by the piston 300, a discharge valve 620 positioned at a front end of the cylinder 200 is opened. The discharge valve 620 is installed inside a supporting cap 640 fixed to one end of the cylinder 200 to be elastically supported by a spiral discharge valve spring 630. The high pressure compressed refrigerant is transferred into a discharge cap 660 through a hole formed in the supporting cap 640, discharged to the outside of the linear compressor 100 through a loop pipe L, and circulated in a freezing cycle.

The respective components of the linear compressor 100 are supported by a front supporting spring 120 and a rear supporting spring 140 in an assembled state, and spaced apart from the bottom of the shell 110. Since the components are not in contact with the bottom of the shell 110, vibration generated in each component of the linear compressor 100 compressing the refrigerant is not transferred directly to the shell 110. Therefore, vibration transferred to the outside of the shell 110 and noise generated by vibration of the shell 110 can be remarkably reduced.

The linear compressor 100 has a stopped fixed member including the cylinder 200, and a linearly-reciprocated moving member including the piston 300. The linear compressor 100 is designed to adjust a resonance frequency fm of the system to a driving frequency fo of the linear motor 400. It can be varied by the front and rear supporting springs 120 and 140, the front and rear main springs 820 and 840, the gas spring, the fixed member and the moving member. However, in consideration of the axis direction linear reciprocation, the influence of the front and rear supporting springs 120 and 140 can be ignored.

Formula

$$f_m = \frac{1}{2\pi} \sqrt{\frac{(K_m + K_g)}{(\dfrac{M_s M_m}{M_s + M_m})}}$$

Accordingly, in the above formula, the resonance frequency fm of the system is varied by a rigidity Km of the front and rear main springs 820 and 840, a rigidity Kg of the gas spring, a mass Ms of the fixed member and a mass Mm of the moving member. Here, while the mass Ms of the fixed member is fixed to a constant, the rigidity Km of the front and rear main springs 820 and 840 has a certain dispersion, and the rigidity Ks of the gas spring is changed according to the initial positions and load conditions of the front and rear main springs 820 and 840. Therefore, predetermined mass members 1000 are added to the moving member to change the mass Mm of the moving member, so that the resonance frequency fm of the system is adjusted to the driving frequency fo of the linear motor 400. At this time, the mass members 1000 are coupled to both side portions of the supporter 320 which do not overlap with the front and rear main springs 820 and 840 in an axis direction in order not to change the initial positions of the front and rear main springs 820 and 840.

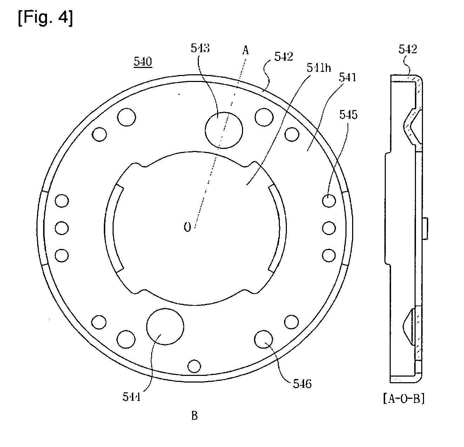

FIG. 4 is a view illustrating an example of the motor cover applied to FIG. 3. The motor cover 540 includes an almost circular body 541 with a hole 541h so that the moving member composed of the piston 300 (refer to FIG. 3), the permanent magnet 460 (refer to FIG. 3), the supporter 320 (refer to FIG. 3) and the muffler 700 (refer to FIG. 3) can be linearly reciprocated through the motor cover 540. In addition, a bent portion 542 bent backward is formed along the outer circumference of the motor cover 540. The bent portion 542 enhances the supporting strength of the motor cover 540.

The center of the motor cover 540 corresponds to the center of the piston 300 (refer to FIG. 3). Two supporting protrusions 543 and 544 protruding backward to support the front main springs 820 (refer to FIG. 3) are formed in positions symmetric around the center. The supporting protrusions 543 and 544 support both ends of the front main springs 820 (refer to FIG. 3) with the supporter 320 (refer to FIG. 3). That is, the supporting protrusions 543 and 544 support the front ends (the other ends) of the front main springs 820 (refer to FIG. 3), and the supporter 320 (refer to FIG. 3) supports the rear ends (one ends) of the front main springs 820 (refer to FIG. 3).

In addition, a plurality of bolt holes 545 to be bolt-fastened to the rear cover 560 (refer to FIG. 3) and a plurality of bolt holes 546 to be bolt-fastened to the frame 520 are formed in both sides of the motor cover 540.

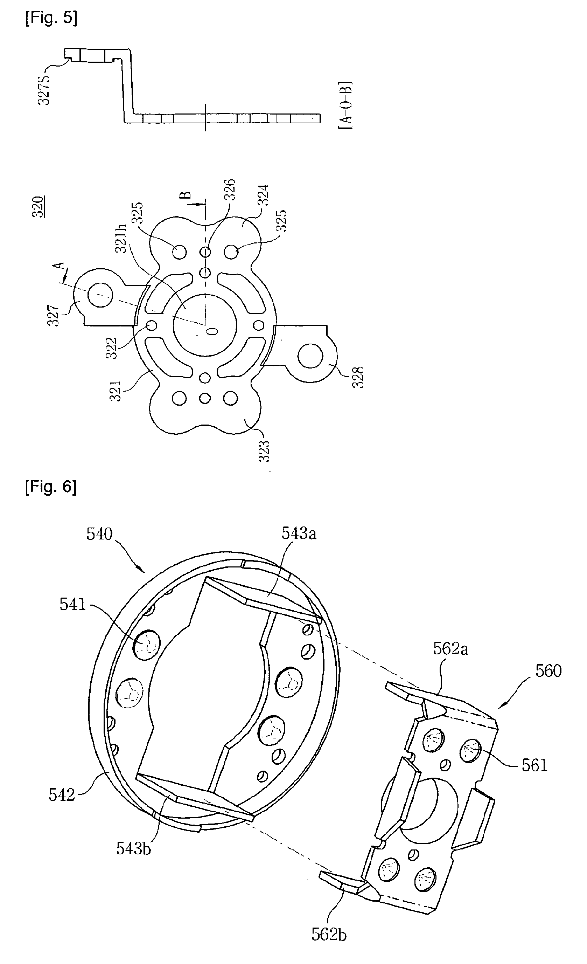

FIG. 5 is a view illustrating an example of the supporter applied to FIG. 3. The supporter 320 is coupled to the back of the piston 300 (refer to FIG. 3), and transfers a force from the main springs 820 and 840 (refer to FIG. 3) to the piston 300 (refer to FIG. 3) so that the piston 300 (refer to FIG. 3) can be linearly reciprocated in the resonance condition. A plurality of bolt holes 323 to be coupled to the piston 300 (refer to FIG. 3) are formed in the supporter 320.

The center of the supporter 320 is positioned corresponding to the center of the piston 300 (refer to FIG. 3). Preferably, a step difference is formed at a rear end of the piston 300 (refer to FIG. 3) so that the centers of the supporter 320 and the piston 300 (refer to FIG. 3) can be easily adjusted to each other. The supporter 320 includes an almost circular body 321. A hole 321h is formed in a central portion of the body 321 so that a part of the muffler 700 can pass through the hole 321h. Guide portions 323 and 324 are formed at left and right portions of the body 321, respectively, and supporting portions 327 and 328 are formed at upper and lower portions thereof, respectively. A plurality of holes 322 are formed near the hole 321h of the body 321 of the supporter 320 so that the muffler 700 (refer to FIG. 3) can be bolt-fastened thereto at the back of the body 321 of the supporter 320. At this time, a front end of the rear main spring 840 (refer to FIG. 3) is supported at the spring guider positioned at the back of the body 321 of the supporter 320, and a rear end of the rear main spring 840 (refer to FIG. 3) is supported at the front of the rear cover 560 (refer to FIG. 3). The muffler 700 (refer to FIG. 3) is positioned inside the rear main spring 840 (refer to FIG. 3).

Moreover, the guide portions 323 and 324 of the supporter 320 are formed to expand from the left and right portions of the body 321 of the supporter 320. Two guide holes 325 are formed in the guide portions 323 and 324 to adjust the center of the spring guider to the center of the piston 300 (refer to FIG. 300), and one bolt hole 326 is formed between the guide holes 325 to bolt-fasten the spring guider thereto.

Further, the supporting portions 327 and 328 of the supporter 320 are formed at the upper and lower portions of the body 321 to be symmetric around the center of the supporter 320, respectively, and bent twice from the body 321. That is, the supporting portions 327 and 328 are bent backward from the body 321 once, and bent upward or downward from the back, respectively. The rear ends (one ends) of the front main springs 820 (refer to FIG. 3) are supported at the front of the supporting portions 327 and 328 of the supporter 320, and the front ends (the other ends) of the front main springs 820 (refer to FIG. 3) are supported at the back of the motor cover 540 (refer to FIG. 3).

As set forth herein, the number of the front main springs 820 (refer to FIG. 3) is reduced into two and the number of the rear main springs 840 (refer to FIG. 3) is reduced into one, which results in a low spring rigidity of the entire resonance system. In addition, when the number of the front main springs 820 (refer to FIG. 3) and the number of the rear main springs 840 (refer to FIG. 3) are reduced, respectively, the manufacturing cost of the main springs can be cut down.

Here, in a case where the rigidity of the front main springs 820 (refer to FIG. 3) and the rear main spring 840 (refer to FIG. 3) is reduced, when the mass of the driving unit such as the piston 300 (refer to FIG. 3), the supporter 320 and the permanent magnet 460 (refer to FIG. 3) is reduced, the driving unit can be driven in the resonance condition. Accordingly, the supporter 320 is manufactured of a non-ferrous metal having a lower density than a ferrous metal, instead of the ferrous metal. As a result, the mass of the driving unit is reduced, corresponding to the low rigidity of the front main springs 820 (refer to FIG. 3) and the rear main spring 840 (refer to FIG. 3), so that the driving unit can be driven in the resonance condition. For example, when the supporter 320 is manufactured of a non-magnetic metal such as Al, even if the piston 300 (refer to FIG. 3) is manufactured of a metal, the supporter 320 is not affected by the permanent magnet 460 (refer to FIG. 3). Therefore, the piston 300 (refer to FIG. 3) and the supporter 320 can be more easily coupled to each other.

When the supporter 320 is manufactured of a non-ferrous metal having a low density, it can satisfy the resonance condition and can be easily coupled to the piston 300 (refer to FIG. 3). However, the portions of the supporter 320 brought into contact with the front main springs 820 (refer to FIG. 3) are easily abraded due to friction against the front main springs 820 (refer to FIG. 3) during the driving. If the supporter 320 is abraded, the abraded pieces float in the refrigerant and circulate in the freezing cycle, which may damage the components existing on the freezing cycle. Thus, the portions 327S of the supporter 320 brought into contact with the front main springs 820 (refer to FIG. 3) are surface-processed. An NIP coating or anodizing treatment is carried out thereon so that a surface hardness of the portions 327S of the supporter 320 brought into contact with the front main spring 820 (refer to FIG. 3) can be higher than at least a hardness of the front main springs 820 (refer to FIG. 3). This configuration prevents the supporter 320 from being abraded into pieces due to the front main springs 820 (refer to FIG. 3).

FIG. 6 is a view illustrating an example of an installation structure of the motor cover and the rear cover of the linear compressor according to the present invention. The motor cover 540 is formed in a disk shape. A pair of spring supporting portions 541 are provided at both sides of the motor cover 540 to support the front main springs 820 (refer to FIG. 3), respectively. A protruding end 542 protruding in an opposite direction to the compression space P (refer to FIG. 3) is provided at a rim portion of the motor cover 540. An opening portion is formed in a center of the motor cover 540 so that the piston 300 (refer to FIG. 3) can be linearly reciprocated through the opening portion. A pair of supporting ends 543a and 543b are provided, protruding in an opposite direction to the compression space P (refer to FIG. 3). The supporting ends 543a and 543b of the motor cover 540 are positioned between the spring supporting portions 541, maintaining a predetermined area in a width direction.

The rear cover 560 is formed in the shape of a rectangular plate. A pair of spring supporting portions 561 are provided in a direction where the supporting ends 543a and 543b of the motor cover 540 are positioned so as to support the rear main springs 840 (refer to FIG. 3). Ends adjacent to the spring supporting portions 561 are bent toward the compression space P (refer to FIG. 3) to form a pair of welding portions 562a and 562b. The welding portions 562a and 562b of the rear cover 560 maintain a predetermined area in a width direction to be brought into contact with the supporting ends 543a and 543b of the motor cover 540 and surface-welded thereto. An interval between the welding portions 562a and 562b of the rear cover 560 is narrower than an interval between the supporting ends 543a and 543b of the motor cover 540 so that outer surfaces of the welding portions 562a and 562b of the rear cover 560 can be welded in contact with inner surfaces of the supporting ends 543a and 543b of the motor cover 540.

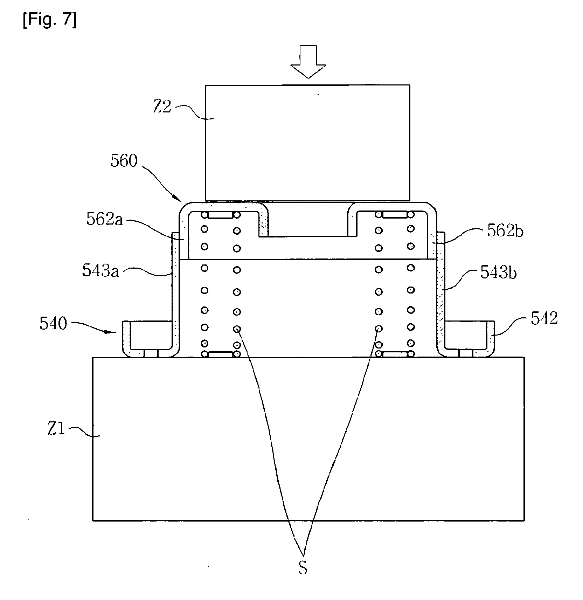

FIGS. 7 to 9 are views illustrating an example of an installation process of the motor cover and the rear cover of the linear compressor according to the present invention.

As illustrated in FIG. 7, the motor cover 540 is put on a lower jig Z1, assembly springs S are put on the lower jig Z1 to be positioned inside the supporting ends 543a and 543b of the motor cover 540, and the rear cover 560 fixed to an upper jig Z2 is moved to adjust welding positions. Here, the welding portions 562a and 562b of the rear cover 560 are fitted between the supporting ends 543a and 543b of the motor cover 540 so that the outer surfaces of the welding portions 562a and 562b of the rear cover 560 can be brought into contact with the inner surfaces of the supporting ends 543a and 543b of the motor cover 540. Maintained is an interval between the motor cover 540 and the rear cover 560 set up in consideration of an initial design value, an assembly tolerance and a measurement tolerance.

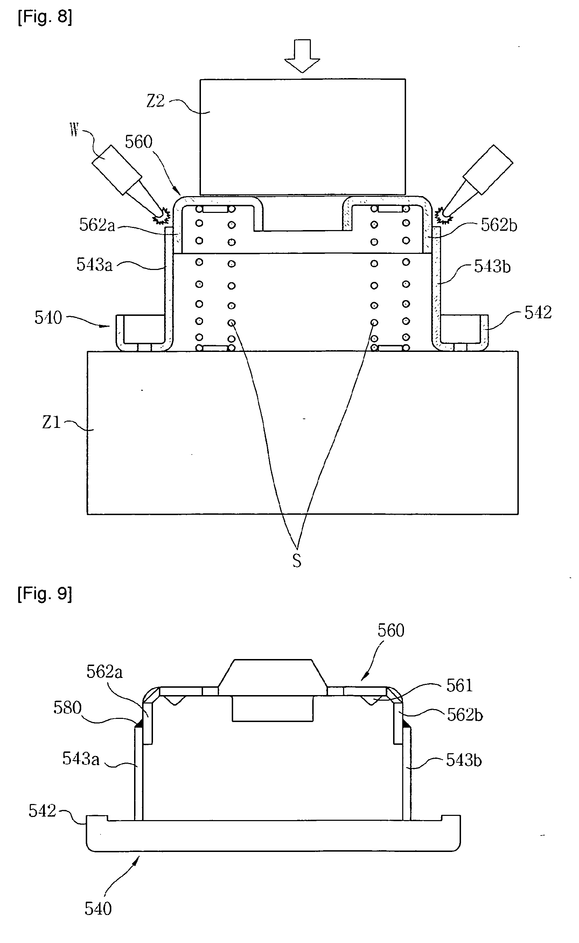

After the welding positions of the motor cover 540 and the rear cover 560 are adjusted, as shown in FIG. 8, the supporting ends 543a and 543b of the motor cover 540 and the welding portions 562a and 562b of the rear cover 560 are firmly surface- welded to each other by using a welding rod W. Here, a plasma welding is carried out.

Accordingly, after the motor cover 540 and the rear cover 560 are welded, when he assembly springs S, the lower jig Z1 and the upper jig Z2 are separated, as shown in FIG. 9, welding beads 580 are generated between the supporting ends 543a and 543b of the motor cover 540 and the welding portions 562a and 562b of the rear cover 560 to connect the motor cover 540 to the rear cover 560. Unnecessary parts of the motor cover 540 are cut to form the supporting ends 543a and 543b, and both ends of the rear cover 560 are bent to form the short welding portions 562a and 562b. In addition, the supporting ends 543a and 543b of the motor cover 540 and the welding portions 562a and 562b of the rear cover 560 are welded to each other by adjusting the welding positions. Consequently, the materials can be less consumed, and the production process can be simplified.

**Claims**

1. A linear compressor (100) comprising
   a fixed member including a cylinder (200) for providing a compression space of refrigerant;
   a moving member including a piston (300) for compressing the refrigerant inside the cylinder, and a supporter (320) composed of a central portion and a supporting portion (327, 328) formed at the upper and lower portions of a body (321) to be symmetric around a center of the supporter (320), respectively, the moving member being linearly reciprocated with respect to the fixed member;
   a plurality of front main springs (820) having one ends supported at a front surface of the supporting portion of the supporter and the other ends supported at a motor cover (540), and positioned to be symmetric around the piston; and
   a plurality of rear main springs (840) having one ends supported at a rear surface of the central portion of the supporter and the other ends supported at a rear cover (560); **characterized in that**
   the motor cover (540) is installed at the front of the supporter to support the front main springs, a pair of supporting ends being formed by partially cutting an inner portion of the motor cover and bent backward; and
   the rear cover (560) is installed at the back of the supporter to support the rear main spring, and fixedly welded to the supporting ends of the motor cover.

2. The linear compressor (100) of claim 1, wherein the supporting ends of the motor cover (540) and the rear cover (560) are surface-welded to each other.

3. The linear compressor (100) of either claim 1 or 2, wherein the rear cover (560) comprises a pair of welding portions (562a, b) formed by partially bending both ends thereof, and the welding portions of the rear cover are welded in contact with opposite surfaces of the supporting ends of the motor cover (540), respectively.

4. The linear compressor (100) of claim 3, wherein an interval between the welding portions (562a, b) of the rear cover (560) is narrower than an interval between the supporting ends of the motor cover (540).

5. The linear compressor (100) of any one of claims 1 to 4, wherein an initial position of the piston (300) is set up according to axis direction welding positions of the supporting ends of the motor (540) cover and the rear cover (560).

6. The linear compressor (100) of any one of claims 1 to 5, comprising a plurality of mass members (1000) coupled to a rear surface of the supporter (320) at a predetermined interval from an outer diameter of the rear main spring (840).

7. The linear compressor (100) of claim 6, wherein the mass members (1000) are coupled to be symmetric around the central portion of the supporter (320).

8. The linear compressor (100) of either claim 6 or 7, wherein the supporter (320) comprises a guide hole (325) for guiding a coupling position.

**Patentansprüche**

1. Linearer Verdichter (100), der aufweist:

   ein festes Element mit einem Zylinder (200) zur Bereitstellung eines Verdichtungsraums für Kältemittel;
   ein sich bewegendes Element mit einem Kolben (300) zum Verdichten des Kältemittels im Inneren des Zylinders und einem Träger (320), der einen mittleren Abschnitt und einen Trägerabschnitt (327, 328) aufweist, der an den oberen und unteren Abschnitt eines Körpers (321) ausgebildet ist, so dass er um eine Mitte des Trägers (320) jeweils symmetrisch ist, wobei das sich bewegende Element in Bezug auf das feste Element linear hin und her bewegt wird;

mehrere vordere Hauptfedern (820), deren eine Enden an einer vorderen Oberfläche des Trägerabschnitts des Trägers gehalten werden und deren andere Enden an einer Motorabdeckung (540) gehalten werden, und die so positioniert sind, dass sie um den Kolben herum symmetrisch sind; und

mehrere hintere Hauptfedern (840), deren eine Enden an einer hinteren Oberfläche des mittleren Abschnitts des Trägers gehalten werden und deren andere Enden an einer hinteren Abdeckung (560) gehalten werden; **dadurch gekennzeichnet, dass**

die Motorabdeckung (540) auf der Vorderseite des Trägers installiert ist, um die vorderen Hauptfedern zu unterstützen, wobei ein Paar von tragenden Enden ausgebildet ist, indem ein innerer Abschnitt der Motorabdeckung teilweise ausgeschnitten und nach hinten gebogen ist; und

wobei die hintere Abdeckung (560) auf der Rückseite des Trägers installiert ist, um die hintere Hauptfeder zu halten, und fest an die Trägerenden der Motorabdeckung geschweißt ist.

2. Linearer Verdichter (100) nach Anspruch 1, wobei die Trägerenden der Motorabdeckung (540) und der hinteren Abdeckung (560) miteinander oberflächenverschweißt sind.

3. Linearer Verdichter (100) nach Anspruch 1 oder 2, wobei die hintere Abdeckung (560) ein Paar von Schweißabschnitten (562a, b) aufweist, die ausgebildet sind, indem ihre beiden Enden teilweise gebogen sind, und wobei die Schweißabschnitte der hinteren Abdeckung jeweils in Kontakt mit entgegengesetzten Oberflächen der Trägerenden der Motorabdeckung (540) verschweißt sind.

4. Linearer Verdichter (100) nach Anspruch 3, wobei ein Abstand zwischen den Schweißabschnitten (562a, b) der hinteren Abdeckung (560) schmaler als ein Abstand zwischen den Trägerenden der Motorabdeckung (540) ist.

5. Linearer Verdichter (100) nach einem der Ansprüche 1 bis 4, wobei eine Anfangsposition des Kolbens (300) gemäß der Achsenrichtung von Schweißpositionen der Trägerenden der Motorabdeckung (540) und der hinteren Abdeckung (560) eingerichtet ist.

6. Linearer Verdichter(100) nach einem der Ansprüche 1 bis 5, der mehrere Massenelemente (1000) aufweist, die in einem vorgegebenen Abstand von einem Außendurchmesser der hinteren Hauptfeder (840) mit einer hinteren Oberfläche des Trägers (320) verbunden sind.

7. Linearer Verdichter (100) nach Anspruch 6, wobei die Massenelemente (1000) derart verbunden sind, dass sie um den mittleren Abschnitt des Trägers (320) symmetrisch sind.

8. Linearer Verdichter (100) nach Anspruch 6 oder 7, wobei der Träger (320) ein Führungsloch (325) aufweist, um zu einer Verbindungsposition zu führen.

**Revendications**

1. Compresseur linéaire (100) comprenant :

un organe fixe comprenant un cylindre (200) pour fournir un espace de compression de réfrigérant ;

un organe mobile comprenant un piston (300) pour compresser le réfrigérant à l'intérieur du cylindre, et un dispositif de support (320) composé d'une portion centrale et d'une portion de support (327, 328) formées respectivement à la portion supérieure et à la portion inférieure d'un corps (321) pour être symétriques autour d'un centre du dispositif de support (320), l'organe mobile se déplaçant linéairement en va-et-vient par rapport à l'organe fixe ;

une pluralité de ressorts principaux avant (820) ayant chacun une extrémité supportée à une surface avant de la portion de support du dispositif de support et une autre extrémité supportée à un couvercle de moteur (540), et positionnés pour être symétriques autour du piston ; et

une pluralité de ressorts principaux arrière (840) ayant chacun une extrémité supportée à une surface arrière de la portion centrale du dispositif de support et une autre extrémité supportée à un couvercle arrière (560) ; **caractérisé en ce que** le couvercle de moteur (540) est installé à l'avant du dispositif de support pour supporter les ressorts principaux avant, une paire d'extrémités de support étant formée par une découpe partielle d'une portion intérieure du couvercle de moteur et repliée vers l'arrière ; et

le couvercle arrière (560) est installé à l'arrière du dispositif de support pour supporter le ressort principal arrière et soudé fixement aux extrémités de support du couvercle de moteur.

**2.** Compresseur linéaire (100) selon la revendication 1, dans lequel les extrémités de support du couvercle de moteur (540) et du couvercle arrière (560) sont soudées l'une à l'autre par soudage de surface.

**3.** Compresseur linéaire (100) selon la revendication 1 ou 2, dans lequel le couvercle arrière (560) comprend une paire de portions de soudage (562a, b) formées par pliage partiel de leurs deux extrémités, et les portions de soudage du couvercle arrière sont soudées en contact respectivement avec des surfaces opposées des extrémités de support du couvercle de moteur (540).

**4.** Compresseur linéaire (100) selon la revendication 3, dans lequel un intervalle entre les portions de soudage (562a, b) du couvercle arrière (560) est plus étroit qu'un intervalle entre les extrémités de support du couvercle de moteur (540).

**5.** Compresseur linéaire (100) selon l'une quelconque des revendications 1 à 4, dans lequel une position initiale du piston (300) est établie en fonction de positions de soudage de direction axiale des extrémités de support du couvercle de moteur (540) et du couvercle arrière (560).

**6.** Compresseur linéaire (100) selon l'une quelconque des revendications 1 à 5, comprenant une pluralité d'organes de masse (1000) couplés à une surface arrière du dispositif de support (320) à un intervalle prédéterminé d'une périphérie extérieure du ressort principal arrière (840).

**7.** Compresseur linéaire (100) selon la revendication 6, dans lequel les organes de masse (1000) sont couplés pour être symétriques autour de la portion centrale du dispositif de support (320).

**8.** Compresseur linéaire (100) selon la revendication 6 ou 7, dans lequel le dispositif de support (320) comprend un trou de guidage (325) pour guider une position de couplage.

[Fig .1]

[Fig. 2]

[Fig. 3]

[Fig. 4]

[Fig. 5]

[Fig. 6]

[Fig. 7]

[Fig. 8]

[Fig. 9]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0745773 A1
- WO 02095232 A1
- WO 2004081379 A2